# EUROPEAN PATENT APPLICATION

(11) **EP 3 885 699 A1**
(43) Date of publication of application: **29.09.2021**
(21) Application number: 20166444.8
(22) Date of filing: 27.03.2020
(51) Int. Cl.: G01B 9/02, G01B 11/06, G01N 35/10, G01F 23/292

(54) **SYSTEM AND METHOD FOR PROCESSING A LABORATORY SAMPLE**

(71) Applicant: Roche Diagnostics GmbH, 68305 Mannheim (DE); F. Hoffmann-La Roche AG, 4070 Basel (CH)
(72) Inventor: Sauer, Benjamin, 71638 Ludwigsburg (DE)
(74) Representative: Patentanwälte Ruff, Wilhelm, Beier, Dauster & Partner mbB

(57) **Abstract**

System (100) for processing a laboratory sample (200), the system (100) comprising:
- an apparatus (105) for determining a vertical position of an interface (10) between the laboratory sample (200) and a component (210), the apparatus (105) comprising:
- a light source (110) for emitting a light beam (115),
- a beam splitter (120) for splitting the light beam (115) into a first light beam (116) directed to the interface (10) and into a second light beam (117) directed to a mirror (130),
- the mirror (130) for reflecting the second light beam (117),
- a detector (140) being adapted to detect an interference signal (IS) formed by interference between the first light beam (116) reflected from the interface (10) and the second light beam (117) reflected from the mirror (130), and
- a process control unit (150) being adapted to determine the vertical position of the interface (10) depending on the interference signal (IS).

## Description

The invention relates to a system for processing a laboratory sample and to a method for processing a laboratory sample.

To process laboratory samples contained in laboratory sample containers typically an interface between the laboratory sample and a further component contained in the laboratory sample container, e.g. ambient air, has to be determined.

It is the object of the invention to provide a system and a method for processing a laboratory sample providing a reliable determination of an interface between the laboratory sample and a further component.

The invention relates to a system for processing a laboratory sample. The system comprises an apparatus for determining a vertical position of an interface between the laboratory sample and a component. The apparatus comprises a light source for emitting a light beam, a beam splitter for splitting the light beam into a first light beam or sample beam and into a second light beam or reference beam, a mirror, a detector and a process control unit. The first light beam is directed to the interface and the second light beam is directed to the mirror. The mirror is adapted to reflect the second light beam and may be movable in a direction of propagation of the second light beam. The detector is adapted to detect an interference signal formed by interference between the first light beam reflected from the interface and the second light beam reflected from the mirror. The process control unit is adapted to determine the vertical position of the interface depending on the interference signal.

The vertical or z position of the interface may be determined over an x-y-plane, e.g. if the interface is uneven.

The light source may be a lamp, a diode, preferably a laser diode, or a laser. The light source may be a white light source.

The light beam may comprise multiple different wavelengths. A spectrum of the light beam may comprise a full width half max in the range of 1 nm to 400 nm. The light beam may be a coherent beam, preferably a spatially coherent beam and/or a temporally coherent beam.

The beam splitter may e.g. be based on dielectric lattices or may be a cube beam splitter. The beam splitter may comprise a split ratio of 50:50. In other words, an optical power of the first light beam and an optical power of the second light beam are equal. The spectrum of the light beam, a spectrum of the first light beam and a spectrum of the second light beam may be equal, preferably not affected or modified by the beam splitter.

The laboratory sample may e.g. be embodied as a blood, urine or a chemical sample. A centrifuged blood sample may e.g. comprise cruor (blood cells), a separation medium and serum at the top.

The vertical position may correspond to a fill level of the laboratory sample contained in the laboratory container. In particular, the vertical position may be a position where the laboratory sample ends and the component e.g. in form of ambient air begins. The interface may be a boundary between the laboratory sample and the component.

An optical refractive index of the laboratory sample may be different from an optical refractive index of the component, preferably the optical refractive index of the laboratory sample may be higher than the optical refractive index of the component. The reflection of the first light beam at the interface may be described by the Fresnel equations. The first light beam may be reflected from the interface back in the direction of incidence, preferably reflected towards the beam splitter.

The mirror may reflect the second light beam back in the direction of incidence, preferably towards the beam splitter.

The detector may be a camera, a photo diode or a power meter.

The apparatus may be an interferometer, preferably a Michelson-Interferometer, wherein a first arm of the interferometer is formed between the beam splitter and the interface and a second arm of the interferometer is formed between the beam splitter and the mirror. Regarding interference of two light beams, in particular regarding the principles of Michelson-Interferometers, reference is also made to the relevant technical literature.

The interference signal may be obtained by superimposing the first light beam reflected from the interface and the second light beam reflected from the mirror.

According to an embodiment the system further comprises a laboratory sample processing means being adapted to process the laboratory sample in response to the vertical position of the interface.

According to an embodiment the system comprises a driving unit being adapted to change a path length between the beam splitter and the mirror, in particular at least over a distance of the sample container length, wherein the detector is adapted to detect an interferogram by detecting, at different path lengths, the interference signal, wherein the process control unit is adapted to determine the vertical position of the interface depending on the interferogram.

The path length may be continuously changed in the direction of propagation of the second light beam. The path length may e.g. be changed in a range between 0.1 mm and 100 mm. The path length may e.g. be changed by means of multiple reflections between a mirror pair moved by a resonantly driven piezo over a distance between 0.1 mm to 5 mm. The path length of the second light beam is known by the process control unit. The path length may e.g. be defined as the distance between the mirror and the beam splitter.

The process control unit may be adapted to initiate and/or to control the driving unit.

The driving unit may comprise a coarse driving unit a fine driving unit, the fine driving unit being adapted to change the path length on a small scale of about 0.1 mm but with high frequency with at least 30 repeated measurements a second. This may e.g. be realized by multiple reflections on a mirror pair of which one is mounted on a piezo crystal which moves the position of the mirror. Additionally both movements can be synchronized by the control unit.

The interferogram may be detected during moving the mirror in the direction of propagation of the second light beam. The interferogram may correspond to the optical power of the interference signal depending on the position of the mirror.

The process control unit may be adapted to determine a maximum value of the interferogram and a max-position of the mirror, wherein the max-position corresponds to the position of the mirror at which the interferogram has its maximum value. It is known from common literature in art regarding interferometry, in particular regarding a Michelson-Interferometer, that a distance between the beam splitter and the mirror at the max-position may be equal to a distance between the beam splitter and the vertical position of the interface where the interferogram comprises its maximum value. Thus, the process control unit may be adapted to assign the distance between the beam splitter and the mirror at the max-position as the distance between the beam splitter and the vertical position of the interface.

According to an embodiment the detector comprises a spectrometer being adapted to perform spectrally resolved interference imaging of the interference signal, wherein the process control unit is adapted to determine the vertical position of the interface depending on the spectrally resolved interference imaging of the interference signal. If the spectrometer is used the mirror may be temporarily fixed. The spectrometer may be adapted to determine a Fourier transformed spectrum of a spectrally resolved interferogram and may be adapted to determine the vertical position of the interface in response to the Fourier transformed spectrum of the spectrally resolved interferogram. Reference is made insofar also to the technical literature.

The process control unit may comprise processing means and may e.g. be embodied as a personal computer. The process control unit may be adapted to cause and/or to control the movement of the mirror. The process control unit may be adapted to initiate and/or to control the laboratory sample processing means.

The processing of the laboratory sample may be formed by pipetting the laboratory sample in response to the vertical position of the interface.

The apparatus may be adapted to determine the vertical position of the interface during processing of the laboratory sample. The process control unit may be adapted to determine a change of the vertical position of the interface during processing of the laboratory sample. The process control unit may be adapted to determine a volume of the laboratory sample inside the laboratory container and/or a volume of a pipetted portion of the laboratory sample in response to the changed vertical position of the interface during processing of the laboratory sample. In particular, the process control unit may be adapted to control the laboratory sample processing means in response to the change of the vertical position of the interface during processing of the laboratory sample, preferably in response to the volume of the laboratory sample inside the laboratory container or the volume of a pipetted portion of the laboratory sample.

According to an embodiment, the component is air, preferably ambient air.

According to an embodiment, the laboratory sample and the component are contained in a laboratory container as different layers. The laboratory container is typically designed as a tube made of glass or transparent plastic and typically has an opening at an upper end. The laboratory container may be used to contain, store and transport the laboratory sample. The laboratory container may be rotationally symmetric and its symmetry axis may be a vertical axis of the laboratory container.

According to an embodiment, the light beam has a wavelength in the range between 150 nm and 4000 nm, in particular between 650 nm and 1550 nm.

According to an embodiment, the beam splitter directs the first light beam such that first light beam enters the laboratory container from above through an opening of the laboratory container.

According to an embodiment, the laboratory sample processing means comprise a pipette having a pipetting tip for aspiration of the laboratory sample. The process control unit is adapted to determine a distance between the pipetting tip and the interface depending on the interference signal. The aspiration may be a suction of a portion of the laboratory sample into the pipetting tip. The process control unit may be adapted to determine a distance between the beam splitter and the pipetting tip. The process control unit may control a movement of the pipetting tip relative to the vertical position of the interface. The pipetting tip may be moved towards the interface and may be immersed into the laboratory sample, preferably with a defined fixed immersion depth. The process control unit may be adapted to initiate and/or may be adapted to control the aspiration of the laboratory sample with the pipetting tip in response to the vertical position of the interface, preferably the process control unit may control the aspiration such that a predefined volume of the laboratory sample is aspirated. In particular, the process control unit may be adapted to determine a change in the vertical position of the interface during aspiration of the laboratory sample and fast interface determination provides feedback for the aspiration process. Additionally, the process control unit may determine a volume of the aspirated laboratory sample in response to the change in the vertical position of the interface. For this purpose, the process control unit may determine geometrical properties of the laboratory container and/or geometrical properties of the pipetting tip. During aspiration the pipetting tip may be further immersed into the laboratory sample to take into account the drop of the interface during aspiration. The process control unit may be adapted to determine the vertical position of the interface during aspiration and may be adapted to control the distance between the pipetting tip and the interface depending on the vertical position of the interface such that aspiration of the component, in particular air, by the pipetting tip is prevented.

According to an embodiment, the apparatus, in particular a system for guiding the light beams of the apparatus, is/are arranged such that the first light beam propagates through the pipetting tip and an opening of the pipetting tip.

According to an embodiment, the apparatus is adapted to determine a vertical position of an interface between the laboratory sample contained in the pipette and the component.

According to an embodiment, the process control unit is adapted to determine a volume of the laboratory sample contained in the pipette depending on the interference signal. The process control unit may be adapted to determine the volume of the laboratory sample contained in the pipette depending on the vertical position of the interface between the laboratory sample contained in the pipette and the component. In particular, the process control unit may be adapted to determine the volume of the laboratory sample contained in the pipette depending on the vertical position of the interface between the laboratory sample contained in the pipette and the component during aspiration. The process control unit may be adapted to control the aspiration depending on the volume of the laboratory sample contained in the pipette.

According to an embodiment, the laboratory sample comprises a plurality, e.g. tree to five, of ingredients separated from each other, preferably as different vertical layers, and having a number of interfaces at different vertical positions between each other. In particular, the plurality of ingredients may comprise (blood) serum, a separation gel or another separation medium and cruor (blood cells). The interfaces may be obtained after centrifuging blood contained inside the laboratory container.

The detector is adapted to detect the interference signal formed by interference between the first light beam reflected from the number of interfaces of the plurality of ingredients and the second light beam reflected from the mirror. The process control unit is adapted to determine the vertical positions of each of the number of interfaces depending on the interference signal. The laboratory sample processing means may be adapted to process one of the plurality of ingredients in response to the vertical positions of the number of interfaces. The control unit may perform an algorithm to identify multiple reflections on interfaces such as foam or bubbles or other inhomogeneity and is able to determine the surface of the homogeneous material.

According to an embodiment, the system comprises a number (e.g. 1 to 100) of laboratory stations, wherein at least one of the number of laboratory stations is adapted to analyze the laboratory sample. The laboratory stations may comprise pre-analytical, analytical and/or post-analytical stations. Pre-analytical stations may be adapted to perform any kind of preprocessing of laboratory samples, laboratory containers and/or laboratory container carriers. Analytical stations may be adapted to use a laboratory sample or a portion of the laboratory sample and a reagent to generate a measuring signal, the measuring signal indicating if and in which concentration, if any, an analyte is existing. Post-analytical stations may be adapted to perform any kind of post-processing of laboratory samples, laboratory containers and/or laboratory container carriers. The pre-analytical, analytical and/or post-analytical stations may comprise at least one of a decapping station, a recapping station, an aliquot station, a centrifugation station, an archiving station, a pipetting station, a sorting station, a laboratory container type identification station, a sample quality determining station, an add-on buffer station, a liquid level detection station, and a sealing/desealing station.

The invention relates to a method for processing a laboratory sample. The method comprises the steps: emitting a light beam, splitting the light beam into a first light beam and into a second light beam, reflecting the first light beam at an interface between the laboratory sample and a component, reflecting the second light beam at a mirror, detecting an interference signal formed by interference between the first light beam reflected from the interface and the second light beam reflected from the mirror, determining a vertical position of the interface depending on the interference signal, and processing the laboratory sample in response to the vertical position of the interface.

The invention will be described in detail with respect to the drawings schematically depicting embodiments of the invention. In detail:
- Fig. 1: schematically depicts a system for processing a laboratory sample according to a first embodiment using a movable mirror,
- Fig. 2: schematically depicts a system for processing a laboratory sample according to a further embodiment using a spectrally resolved interferogram,
- Fig. 3: schematically illustrates an interferogram used in the embodiment of Fig. 1,
- Fig. 4: schematically illustrates a spectrally resolved interferogram and a Fourier transformed spectrum of the sprectraly resolved interferogram used in the embodiment of Fig. 2,
- Fig. 5: schematically depicts the system of Fig. 1 or Fig. 2, wherein a pipetting tip of the system contains an aspirated laboratory sample, and
- Fig. 6: schematically illustrates the system of Fig. 1 or Fig. 2 further comprising a number of laboratory stations.

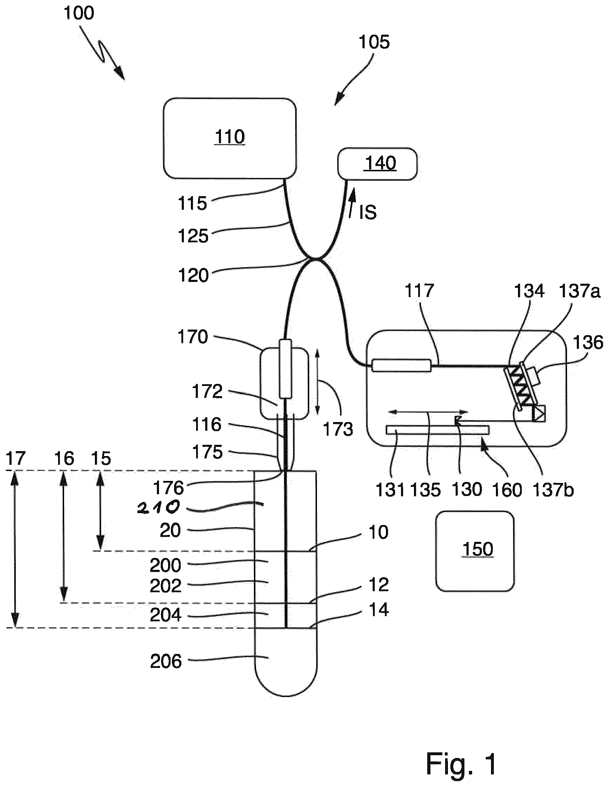

Fig. 1 schematically depicts a system 100 for processing a laboratory sample 200, here a blood sample, contained in a laboratory container 20.

The laboratory sample 200 comprises three ingredients, wherein the first ingredient is liquid (blood) serum 202, the second ingredient is separation gel 204 and the third ingredient is cruor (blood cells) 206. The three ingredients 202, 204, 206 are separated from each other and are contained in the laboratory container 20 as different vertical layers having two interfaces 12, 14 at different vertical positions between each other.

The laboratory container 20 contains a component 210 in form of ambient air above the laboratory sample 200, wherein an interface 10 is formed between the component, i.e. ambient air 210, and the laboratory sample 200, i.e. serum 202.

The system 100 comprises an apparatus 105 for determining a vertical position of the interface 10 between the laboratory sample 200 and the component 210.

The apparatus 105 comprises a light source 110 for emitting a light beam 115 having a wavelength in the range between 150 nm and 4000 nm. The light source 110 may be embodied as a laser diode.

The apparatus 105 further comprises a system 125 for guiding the light beam 115 to a beam splitter 120. The guiding system 125 may be embodied as a fiber light guide. The beam splitter 120 splits the light beam 115 into a first light beam 116 directed to the interface 10 and into a second light beam 117 directed to a mirror 130 comprised in the apparatus 105. A spectrum of the light beam 115, a spectrum of the first light beam 116 and a spectrum of the second light beam 117 are equal. In other words: the beam splitter 120 does not affect the spectral properties of the beams 115, 116, 117.

The optical refractive index of the laboratory sample 200, i.e. the optical refractive index of the ingredients 202, 204, 206 of the laboratory sample 200, differs/differ from an optical refractive index of the component 210, in particular the optical refractive index of the liquid serum 202 is higher than the optical refractive index of the ambient air 210. Thus, the first light beam 116 directed to the interface 10 is reflected by the interface 10, wherein the reflection of the first light beam 116 at the interface 10 is described by the Fresnel equations. The light source 110 and the beam splitter 120 are arranged such that the first light beam 116 is at least partially reflected back from the interface 10 in the direction of incidence of the first light beam 116 towards the beam splitter 120.

The mirror 130 reflects the second light beam 117 back in the direction of incidence of the second light beam 117 towards the beam splitter 120.

The system 100 comprises a driving unit 160 being adapted to change a path length z between the beam splitter 120 and the mirror 130 for the second light beam 117.

The driving unit 160 comprises a path length coarse control unit 131 in form of a translation stage being adapted to continuously bidirectionally move the mirror 130 in a direction 135 of propagation of the second light beam 117.

The driving unit 160 further comprises a path length fine control unit 134 being adapted to fine tune the path length of the second light beam 117. The path length fine control unit 134 can continuously change the path length at least 30 times per second by at least 500 µm. The path length fine control unit 134 may be embodied by a piezo 136 driven system which moves one mirror of a mirror pair in between the second light beam 117 is reflected multiple times. The path length is changed in a controlled way, such that the absolute path length caused by the fine control unit 134 is known.

The beam splitter 120 comprises a split ration such that an optical power of the reflected first light beam 116 and an optical power of the reflected second light beam 117 deviates less than 10% from each other, preferably less than 5%.

At the beam splitter 120 the reflected first light beam 116 and the reflected second light beam 117 are superimposed forming a combined or interference signal IS at a detector 140. The light source 110, the beam splitter 120, the mirror 130 and/or the interface 10 are arranged such that the interference signal IS is directed to the detector 140.

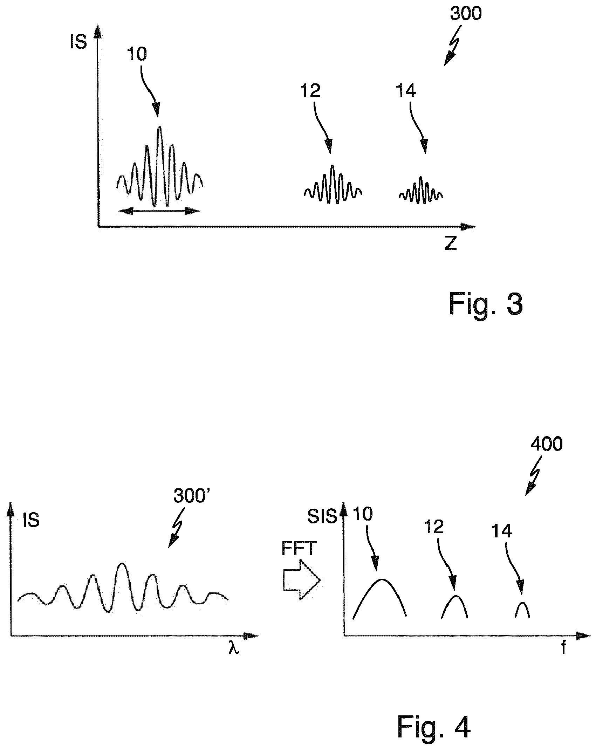

The detector 140, e.g. embodied in form of a light sensitive diode, is adapted to detect an interferogram 300, see fig. 3, by detecting, at different path lengths z, the interference signal IS formed by interference between the first light beam 116 and the second light beam 117. In particular, the detector 140 detects the power evolution of the interference signal IS depending on the path length z.

The apparatus 105 comprises a process control unit 150 being adapted to determine the vertical position of the interface 10 depending on the interferogram 300. The process control unit 150 may be embodied as a personal computer, which causes and/or controls the driving unit 160. Further, the process control unit 150 is functionally coupled to the detector 140 such that the interferogram 300 is transferred to the process control unit 150.

To determine the vertical position of the interface 10, the process control unit 150 analyses the interferogram 300, see fig. 3. The process control unit 150 determines the maximum value(s) of the interferogram 300. Based on this maximum and the known path length of the second beam 117 the process control unit 150 determines the relative position of the surface 10 to the beam splitter 120.

In other words: The apparatus 105 comprises an interferometer for determining a distance between the beam splitter 120 and the interface 10, preferably a Michelson-Interferometer, wherein a first arm of the interferometer is formed by the beam splitter 120 and the interface 10 and a second arm of the interferometer is formed by the beam splitter 120 and the mirror 130. The distance between the beam splitter 120 and the interface 10 is determined interferometrically.

The system 100 comprises laboratory sample processing means 170 being adapted to process the laboratory sample 200 in response to the vertical position of the interface 10.

In the embodiment depicted in Fig. 1 the processing of the laboratory sample 200 is a pipetting of the laboratory sample 200. For this purpose, the laboratory sample processing means 170 comprise a pipette 172 having a pipetting tip 175 for aspiration of the laboratory sample 200.

The process control unit 150 is adapted to initiate and/or to control the pipetting of the laboratory sample 200, in particular is adapted to position the pipetting tip 175 relative to the interface 10 by a linear bidirectional movement 173 and to control the aspiration of the laboratory sample 200. The process control unit 150 is adapted to determine a distance 15 between an end of the pipetting tip 175 and the interface 10 depending on the interferogram 300. The distance 15 is determined by subtracting the distance between the end of the pipetting tip 175 and the beam splitter 120 from the distance between the beam splitter 120 and the interface 10.

Fig. 1 shows that the apparatus 105 is arranged such that the first light beam 116 and the reflected first light beam 116 respectively propagate through an opening 176 of the pipetting tip 175.

For pipetting the serum 202, the pipetting tip 175 is moved towards the interface 10 and is immersed into the serum 202 by a defined fixed immersion depth. After the pipetting tip 175 is immersed into the serum 202 the process control unit 150 initiates and/or controls the aspiration of the serum 202 by means of the pipetting tip 175. During the aspiration of the serum 202, a portion of the serum 202 is sucked into the pipetting tip 175.

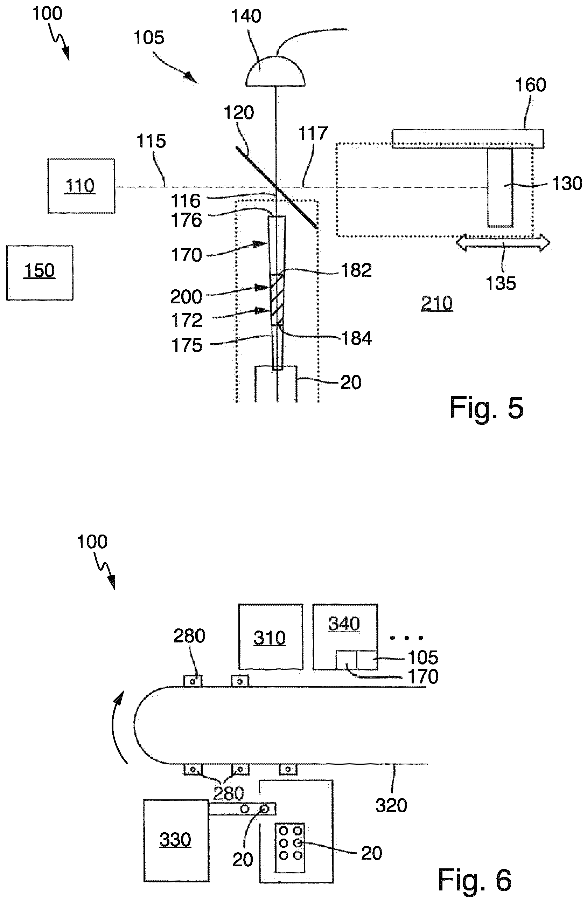

The process control unit 150 is adapted to determine a vertical position of an interface 182 between the serum 202 contained in the pipette 172 and ambient air 210, see fig. 5. The determination is done based on a further interferogram.

The process control unit 150 is adapted to determine a volume of the portion of the serum 202 being sucked into the pipetting tip 175 depending on a geometry of the pipetting tip 175 and the further interferogram. In other words: The process control unit 150 is adapted to determine the volume of the serum 202 contained in the pipette 172 depending on the further interferogram.

The process control unit 150 is adapted to stop aspiration when a predefined volume of the serum 202 is aspirated.

After aspiration of the serum 202 the pipetting tip 175 is moved out of the remaining laboratory sample 200, see fig. 5. As depicted in fig. 5, ambient air 210 has been sucked into the pipetting tip 175 resulting in a further interface 184 between the serum 202 contained in the pipette 172 and ambient air 210. The further interface 184 reflects the first light beam 116. This fact is used by the process control unit 150 to determine a vertical position of the further interface 184 based on the corresponding interferogram. The process control unit 150 then determines the volume of the serum 202 contained in the pipette 172 depending on the vertical position of the interface 182 and the vertical position of the further interface 184.

As mentioned before, Fig. 1 shows that the laboratory sample comprises three ingredients 202, 204, 206 forming two interfaces 12, 14. Each interface 12, 14 reflects the first light beam 116 described by the Fresnel equations, wherein the detector 140 detects an interferogram caused by all interfaces 10, 12, 14. The process control unit 150 determines the vertical positions of all interfaces 10, 12, 14 based on the detected interferogram. Further, the process control unit 150 determines distances 16, 17 between the interfaces 12, 14 and the end of the pipetting tip 175. Moreover, the process control unit 150 controls the pipetting of the laboratory sample 200 in response to the determined vertical positions and/or the distances 16, 17 of each interface 12, 14.

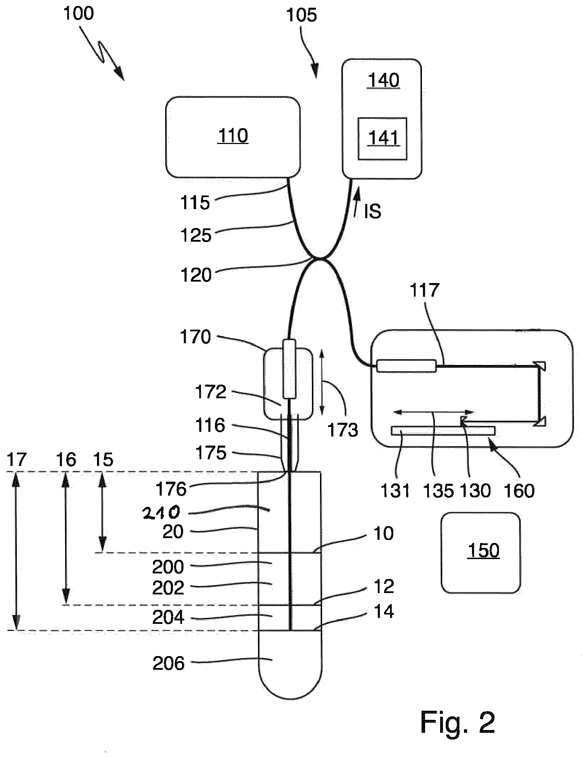

Fig. 2 depicts an embodiment using a spectrometer 141 to acquire a spectrally resolved interferogram 300' as shown in fig. 4. In this spectrally resolved interferogram 300' the interference signal IS from multiple reflections is encoded as several frequencies or wavelengths depending on the path length difference to the light beam 117. The maximum path length difference depends on the resolving capability of the spectrometer 141. The mirror 130 can be moved to compensate for a limited resolution of the spectrometer 141. The spectrometer 141 may be adapted to determine a Fourier transformed spectrum 400 of the spectrally resolved interferogram 300' to determine the vertical positions of the interfaces 10, 12, 14 in response to the Fourier transformed spectrum 400 of the spectrally resolved interferogram 300'.

Fig. 6 schematically illustrates the system 100 of Fig. 1 and 2 comprising an exemplary laboratory station 310, a centrifuge station 330 and an aliquoter unit 340 including the apparatus 105 and the laboratory sample processing means 170 in form of a pipetting station. The pipetting station 170 and the apparatus 105 are functionally coupled to each other such that the vertical position of the interface 10 is determined before and/or during pipetting the laboratory sample 200.

Self-evidently, the system may include further laboratory stations, such as pre-analytical stations, analytical stations and post analytical stations.

The system 100 further includes a laboratory container transport unit adapted to transport laboratory containers 20 between the laboratory stations 310, 330, 340. The laboratory container transport unit includes a number of laboratory container carriers 280 and a conveyor 320, wherein the laboratory container carriers 280 are attached to the conveyor 320.

## Claims

1. System (100) for processing a laboratory sample (200), the system (100) comprising:
- an apparatus (105) for determining a vertical position of an interface (10) between the laboratory sample (200) and a component (210), the apparatus (105) comprising:
- a light source (110) for emitting a light beam (115),
- a beam splitter (120) for splitting the light beam (115) into a first light beam (116) directed to the interface (10) and into a second light beam (117) directed to a mirror (130),
- the mirror (130) for reflecting the second light beam (117),
- a detector (140) being adapted to detect an interference signal (IS) formed by interference between the first light beam (116) reflected from the interface (10) and the second light beam (117) reflected from the mirror (130), and
- a process control unit (150) being adapted to determine the vertical position of the interface (10) depending on the interference signal (IS).

2. System (100) according to claim 1, **characterized in that**
- the system comprises a laboratory sample processing means (170) being adapted to process the laboratory sample (200) in response to the determined vertical position of the interface (10).

3. System (100) according to anyone of the preceding claims, **characterized in that**
- the system (100) comprises a driving unit (160) being adapted to change a path length (z) between the beam splitter (120) and the mirror (130), wherein the detector (140) is adapted to detect an interferogram (300) by detecting, at different path lengths (z), the interference signal (IS), wherein the process control unit (150) is adapted to determine the vertical position of the interface (10) depending on the interferogram (300).

4. System (100) according to anyone of the preceding claims, **characterized in that**
- the detector (140) comprises a spectrometer (141) being adapted to perform spectrally resolved interference imaging of the interference signal (IS), wherein the process control unit (150) is adapted to determine the vertical position of the interface (10) depending on the spectrally resolved interference imaging of the interference signal (IS).

5. System (100) according to anyone of the preceding claims, **characterized in that**
- the laboratory sample (200) and the component (210) are contained in a laboratory container (20) as different layers.

6. System (100) according to claim 5, **characterized in that**
- the beam splitter (120) directs the first light beam (116) such that first light beam (116) enters the laboratory container (20) from above through an opening of the laboratory container (20).

7. System (100) according to anyone of the preceding claims, **characterized in that**
- the light beam (115) has a wavelength in the range between 150 nm and 4000 nm.

8. System (100) according to anyone of the preceding claims, **characterized in that**
- the laboratory sample processing means (170) comprise a pipette (172) having a pipetting tip (175) for aspiration of the laboratory sample (200),
- wherein the process control unit (150) is adapted to determine a distance (15) between the pipetting tip (175) and the interface (10) depending on the interference signal (IS).

9. System (100) according to claim 8, **characterized in that**
- the apparatus (105) is arranged such that the first light beam (116) propagates through an opening (176) of the pipetting tip (175).

10. System (100) according to claim 8 or 9, **characterized in that**
- the apparatus (105) is adapted to determine a vertical position of an interface (182) between the laboratory sample (200) contained in the pipette (172) and the component (210).

11. System (100) according to claim 10, **characterized in that**
- the process control unit (150) is adapted to determine a volume of the laboratory sample (200) contained in the pipette (172) depending on the interference signal (IS).

12. System (100) according to anyone of the preceding claims, **characterized in that**
- the laboratory sample (200) comprises a plurality of ingredients (202, 204, 206) separated from each other and having interfaces (12, 14) at different vertical positions between each other,
- wherein the detector (140) is adapted to detect the interference signal (IS) formed by interference between the first light beam (116) reflected from the interfaces (12, 14) between the ingredients and the second light beam (117) reflected from the mirror (130),
- wherein the process control unit (150) is adapted to determine the vertical positions of each of the interfaces (12, 14) depending on the interference signal (IS).

13. System (100) according to anyone of the preceding claims, **characterized in that**
- the driving unit (160) further comprises a path length fine control unit (134) being adapted to fine tune the path length (z) between the beam splitter (120) and the mirror (130), wherein path length fine control unit (134) comprises a mirror pair (137a, 137b) and a piezo drive (136) being coupled to one mirror (137a) of the mirror pair (137a, 137b), wherein the second light beam (117) is reflected between the mirror pair (137a, 137b) multiple times and the piezo drive (136) is adapted to change a distance between the mirrors of the mirror pair (137a, 137b).

14. Method for processing a laboratory sample (200), the method comprising the steps:
- emitting a light beam (115),
- splitting the light beam (115) into a first light beam (116) and into a second light beam (117),
- reflecting the first light beam (116) at an interface (10) between the laboratory sample (200) and a component (210),
- reflecting the second light beam (117) at a mirror (130),
- detecting an interference signal (IS) formed by interference between the first light beam (116) reflected from the interface (10) and the second light beam (117) reflected from the mirror (130), and
- determining a vertical position of the interface (10) depending on the interference signal (IS).

15. Method according to claim 14, **characterized by** the step:
- processing the laboratory sample (200) in response to the determined vertical position of the interface (10).
